# EUROPEAN PATENT APPLICATION

(11) **EP 1 848 227 A1**
(43) Date of publication of application: **24.10.2007**
(21) Application number: 07105729.3
(22) Date of filing: 05.04.2007
(51) Int. Cl.: H04Q 7/22

(54) **Method and apparatus for controlling transmission of message during handover in mobile communication terminal**

(30) Priority: 18.04.2006 KR 20060034770
(71) Applicant: Samsung Electronics Co., Ltd., Suwon-si, Gyeonggi-Do (KR)
(72) Inventor: Choi, Yoon-Suk, Daejeon (KR); Kim, Jung-Eun, Seoul (KR); Lee, Sang-Hyun, Seoul (KR)
(74) Representative: Zimmer, Franz-Josef

(57) **Abstract**

A method for controlling a transmission of Short Message Service (SMS) data during a handover of a mobile communication terminal and an apparatus thereof are provided. The method includes determining whether a handover is currently being conducted, if SMS transmission is requested in a communication mode; deferring the transmission of SMS data if it is determined that the handover is being conducted; and transmitting the SMS data if the handover is finished. Therefore, a call drop due to the transmission of SMS data during handover can be prevented, and the transmission of the SMS data is ensured.

## Description

The present invention relates to a mobile communication terminal, and in particular, to a method and apparatus of controlling transmission of Short Message Service (SMS) message according to whether or not handover is conducted.

In a mobile communication system, a handover is required for a mobile communication terminal to continue communication when the mobile communication terminal passes the boundary between base stations. The term 'handover' refers to the process of transferring a current communication channel to a communication channel in a new cell, when the mobile station moves out of the current cell to the new cell, so that communication can continue without interruption.

The handover of the mobile communication terminal will be explained in further detail below. First, the mobile communication terminal in communication mode sends out a measurement report message to a network periodically, such as in every 104th, or 102nd frame. The measurement report message may include information such as frequency and level of reception signal of a serving cell, quality level of reception signal, and frequency and level of reception signal of a neighboring cell. The network can determine the quality of communication of the mobile communication terminal by using the measurement report message. When it is determined that the mobile communication terminal has poor communication quality, the network determines a cell to handover the mobile communication terminal with reference to the measurement report message, and thus sends out a Handover_command message to the mobile communication terminal to instruct the terminal to move to another cell. Accordingly, the mobile communication terminal conducts the handover by moving out to a new cell.

Meanwhile, in the 2^{nd}- or 3^{rd}-generation system proposed by the European Telecommunications Standards Institute (ETSI) or the 3rd Generation Partnership Project (3GPP), the process of sending Short Message Service (SMS) messages is conducted according to the TS 04.08 or TS 04.11 standards, if a user of mobile communication terminal attempts to send the SMS message or is currently receiving the SMS message from the network. The SMS message transmission is not influenced by the operational status of the mobile communication terminal, and thus is always available regardless of whether the mobile communication terminal is in an idle state.

In the level of physical layer, i.e., in the first layer, SMS message is transmitted and received in the Stand-alone Dedicated Control Channel (SDCCH) before the mobile communication terminal is connected to the traffic channel, and transmitted and received in the Slow Associated Control Channel (SACCH) after the mobile communication is connected to the traffic channel. In the level of data link layer, i.e., in the second layer, the SMS message is transmitted and received with the Service Access Point Indicator (SAPI) 3, while other signaling messages associated with the controlling operation are transmitted and received with SAPI 0.

Because the handover starts when the quality or power level of the radio link deteriorates, it is highly likely that the SMS message is transmitted again and again if the SMS message is conducted during the handover signaling.

Currently, whether or not to keep the current channel is determined in the first layer based on the quality and level of reception signal, and whether or not to keep the currently set radio link is determined in the second layer based on the retransmission of the frame. More specifically, if a frame is transmitted in the previous time session but a response signal is not received within a predetermined interval, such as when a response signal is not received until the T200 timer expires, the previously-sent frame is retransmitted. The radio link is cut if the number of times the retransmission of the frame is sent exceeds a predetermined reference such as N200, because the fact that the number of times of frame retransmission exceeds the reference indicates that data transmission over the current radio link is impossible.

The reference to determine whether or not to keep the radio link in the second layer applies only to SAPI 0. In other words, the reference is only applicable to the number of times of retransmitting the signaling message with SAPI 0, but not to the number of times of retransmitting the SMS message with SAPI 3. Accordingly, a call drop can be avoided if the radio link is maintained even when the SMS message is frequently retransmitted during handover signaling.

Although the SMS message by SAPI 3 is not influenced by the reference of the second layer to determine whether to keep the radio link, a call drop may occur by a CM service request message which is the signaling message for the SMS. That is, while the SMS message is transmitted with SAPI 3, the CM service request message is transmitted with SAPI 0 in the initialization stage before the SMS message is transmitted between a mobile communication terminal and the network. More specifically, if a mobile communication terminal attempts to send SMS message before moving out of an old cell which probably has a weak radio link reception signal or poor reception, the mobile communication terminal first sends a CM service request signaling message with SAPI 0 to the network to set the SMS message transmission, and a call drop may occur in the second layer if the signaling message is retransmitted more than N200.

As a result, although it was attempted to prevent a call drop during handover by not applying the reference to determine whether to keep the radio link in the second layer to the transmission path of the SMS message such as SAPI 3, the occurrence of call drop by the SMS during handover is not completely avoided.

The present invention has been designed to substantially solve at least the above problems and/or disadvantages and to provide at least the advantages below. It is the object of the present invention to provide a method for controlling transmission of Short Message Service (SMS) messages during handover of a mobile communication terminal.

This object is solved by the subject matter of the independent claims.

Preferred embodiments are defined in the dependent claims.

It is an aspect of the present invention to provide a method of preventing a call drop due to transmission of SMS message, by determining whether to transmit SMS message according to whether handover is conducted.

In order to achieve the above, the present invention provides a method for controlling a transmission of Short Message Service (SMS) message during handover of a mobile communication terminal, including determining whether a handover is currently being conducted, if SMS message transmission is requested in communication mode; deferring the transmission of SMS message if it is determined that the handover is being conducted; and transmitting the SMS message if the handover is finished.

The present invention will become more apparent from the following detailed description when taken in conjunction with the accompanying drawings in which:
FIG. 1 is a block diagram of a mobile communication terminal according to the present invention; and
FIG. 2 is a flowchart illustrating the process for controlling Short Message Service (SMS) message during handover of a mobile communication terminal, according to the present invention.

Preferred embodiments of the present invention will be described herein below with reference to the accompanying drawings. In the following description, well-known functions or constructions are not described in detail since they would obscure the invention in unnecessary detail.

A method for controlling transmission of Short Message Service (SMS) messages during handover of a mobile communication terminal according to the present invention will be explained below.

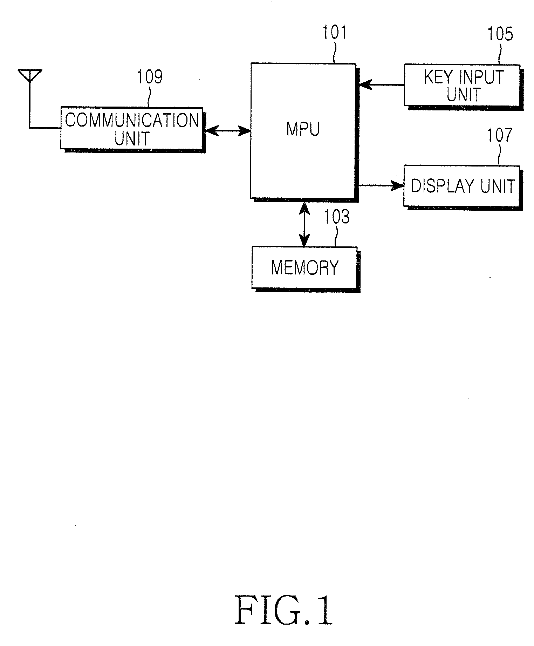

FIG. 1 is a block diagram of a mobile communication terminal according to the present invention.

Referring to FIG. 1, a mobile communication terminal may include a microprocessor unit (MPU) 101, a memory 103, a key input unit 105, a display unit 107, and a communication unit 109.

The MPU 101 controls overall operations of the mobile communication terminal. For example, the MPU 101 may perform usual processing and controlling of voice and data communications, and may further perform, according to the present invention, the controlling of SMS message according to whether handover is conducted. The explanation of the usual processing and controlling of the MPU 101 will be omitted below for the sake of brevity.

The memory 103 may comprise a Read Only Memory (ROM), a Random Access Memory (RAM), and flash ROM. The ROM stores micro-codes of the processing and controlling programs of the MPU 101, and other reference data. According to the present invention, the ROM may also store a program according to which whether to transmit the SMS message is determined based on whether or not handover is conducted. The RAM operates as a working memory of the microprocessor unit 101, and stores temporary data which are generated as the programs are executed. The flash ROM stores updatable data.

The key input unit 105 includes a variety of function keys such as numeral buttons 0 - 9, a menu button (Menu), a cancel button (Delete), a confirm button, a call button (Talk), an end button (End), an Internet logon button, a navigation key or direction key (▲ **▼ ◄** ►), and other buttons, and provides the controller 101 with the key input data according to the key pressed by the user. The display unit 107 displays status information of the mobile communication terminal which is generated during operation, a limited number of characters, and a large amount of moving and still images. The display unit 107 may be implemented as a color Liquid Crystal Display (LCD).

The communication unit 109 processes transmission and reception of a wireless signal which is input and output over an antenna. For example, in transmission, the communication unit 109 performs channel coding, spreading, and radio frequency (RF) conversion, and transmits the data. In reception, the communication unit 109 performs despreading and channel decoding of the RF signal to recover the received data.

The mobile communication terminal for controlling a transmission of SMS message can be explained by comprising means for determining whether a handover is currently being conducted, if SMS message transmission is requested in a communication mode, means for deferring the transmission of SMS message if it is determined that the handover is being conducted, and means for transmitting the SMS message if the handover is completed.

Also, the mobile communication terminal for controlling a transmission of a message can be configured by comprising means for preparing a transmission of a message, and means for determining transmission of the message according to whether a handover is being conducted. Here, the message is Short Message Service (SMS) message or e-mail message. The handover is an intra cell handover between sections in the same cell or an inter cell handover between neighboring cells.

The terminal may further comprise means for transmitting the message, if the handover is not being conducted and means for deferring transmission of the message, if the handover is being conducted and means for transmitting the message, if the handover is completed.

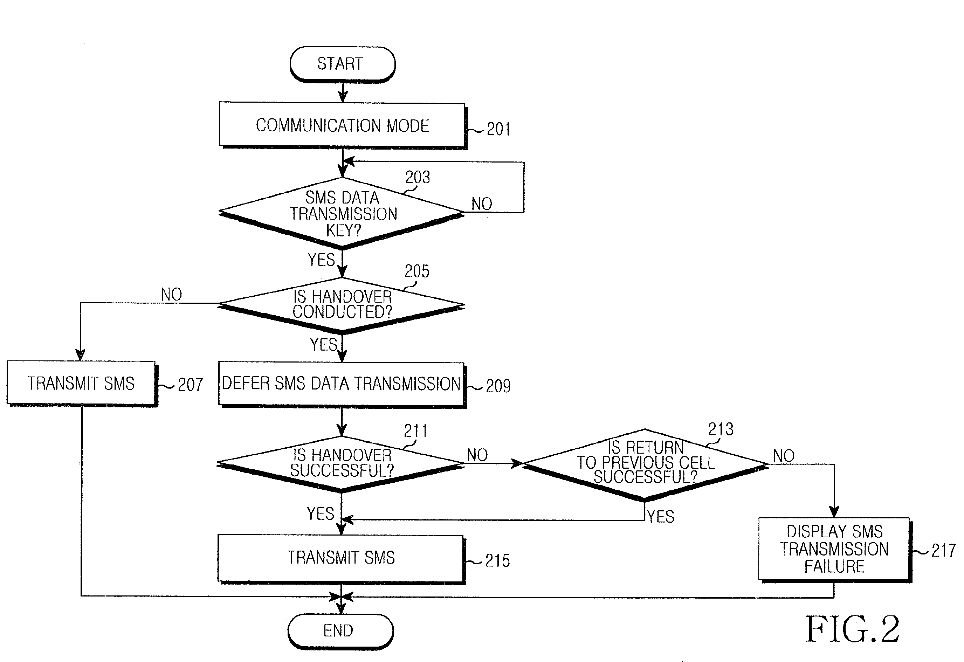

FIG. 2 is a flowchart illustrating the process for controlling transmission of SMS message during handover of a mobile communication terminal according to the present invention.

Referring to FIG. 2, the MPU 101 connects a call to a receiving terminal according to key manipulation of a user and provides the user with the communication mode in step 201.

Here, a message is Short Message Service (SMS) message or e-mail message. Handover is an intra cell handover between sections in the same cell or an inter cell handover between neighboring cells.

The MPU 101 determines whether there is a key input for the transmission of SMS message in step 203, and if determining there is a key input, goes to step 205 to determine whether the handover is being conducted. In other words, the MPU 101 determines whether the mobile communication terminal is moving to a new cell according to a Handover_command message received from the network. If it is determined that the handover is not being conducted in step 205, the MPU 101 transmits the SMS message to an intended receiving terminal in step 207 and ends the algorithm according to the present invention.

If it is determined in step 205 that the handover is being conducted, the MPU 101 stores the SMS message in the memory 103 and defers the transmission of the SMS message in step 209 until the handover is completed. The MPU 101 determines whether the handover is successfully conducted in step 211, and if so, goes to step 215 to transmit the stored SMS message to a corresponding receiving terminal and ends the algorithm according to the present invention.

If it is determined that the handover is not successful, the MPU 101 goes to step 213 to attempt a return to the previous cell and determine whether the return is successful. If the return to the previous cell is successful, the MPU 101 transmits the SMS message to a corresponding receiving terminal in step 215, but if the return is unsuccessful, the MPU 101 goes to step 217 and outputs a failure of an SMS message transmission through the display unit 107. The MPU 101 then ends the algorithm according to the present invention.

The method for controlling a transmission of a message in a mobile communication terminal can be explained by the steps of preparing a transmission of a message, determining transmission of the message according to whether a handover is being conducted. Further transmitting the message is performed if the handover is not being conducted. And deferring transmission of the message is performed if the handover is being conducted. In this case, transmitting the message is further performed if the handover is completed.

As explained above, according to the present invention, if a mobile communication terminal requests SMS message transmission, the transmission of SMS message is adaptively controlled according to whether handover is currently being conducted. Therefore, a call drop due to the transmission of SMS message during handover can be prevented, and the transmission of the SMS message is ensured.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain preferred embodiments thereof, it will be understood by those skilled in the art that various changes in form and details may be made therein without departing from the scope of the invention as defined by the appended claims.

## Claims

1. A method for controlling a transmission of an SMS message in a mobile communication terminal, comprising:
determining whether a handover is currently being conducted, if an SMS message transmission is requested in a communication mode;
deferring the transmission of the SMS message if it is determined that the handover is being conducted; and
transmitting the SMS message if the handover is completed.

2. The method of claim 1, further comprising transmitting the SMS message, if it is determined that the handover is not being conducted after the step of determining.

3. The method of claim 1 or 2, further comprising:
attempting a return to a previous cell and determining whether the return is successful, if the handover is unsuccessful;
transmitting the SMS message if the return to the previous cell is successful; and
outputting a failure of SMS message transmission through a display unit, if the return to the previous cell is unsuccessful.

4. A method for controlling a transmission of a message in a mobile communication terminal, comprising:
preparing a transmission of a message; and
determining transmission of the message according to whether a handover is being conducted.

5. The method of claim 4, wherein the message is one of an SMS message or an e-mail message.

6. The method of claim 4 or 5, wherein the handover is an intra cell handover or an inter cell handover.

7. The method of one of claims 4 to 6, further comprising transmitting the message, if the handover is not being conducted.

8. The method of one of claims 4 to 7, further comprising deferring transmission of the message, if the handover is being conducted.

9. The method of claim 8, further comprising transmitting the message, if the handover is completed.

10. A mobile communication terminal for controlling a transmission of an SMS message, comprising:
means for determining whether a handover is currently being conducted, if an SMS message transmission is requested in a communication mode;
means for deferring the transmission of the SMS message if it is determined that the handover is being conducted; and
means for transmitting the SMS message if the handover is completed.

11. The mobile communication terminal of claim 10, further comprising means for transmitting the SMS message, if it is determined that the handover is not being conducted after the step of determining.

12. The mobile communication terminal of claim 10 or 11, further comprising:
means for attempting a return to a previous cell and determining whether the return is successful, if the handover is unsuccessful;
means for transmitting the SMS message if the return to the previous cell is successful; and
means for outputting a failure of SMS message transmission through a display unit, if the return to the previous cell is unsuccessful.

13. A mobile communication terminal for controlling a transmission of a message, comprising:
means for preparing a transmission of a message; and
means for determining transmission of the message according to whether a handover is being conducted.

14. The mobile communication terminal of claim 13, wherein the message is one of an SMS message or an e-mail message.

15. The mobile communication terminal of claim 13 or 14, wherein the handover is an intra cell handover or an inter cell handover.

16. The mobile communication terminal of one of claims 13 to 15, further comprising means for transmitting the message, if the handover is not being conducted.

17. The mobile communication terminal of one of claims 13 to 16, further comprising means for deferring transmission of the message, if the handover is being conducted.

18. The mobile communication terminal of claim 17, further comprising means for transmitting the message, if the handover is completed.

19. A computer-readable recording medium having recorded thereon a program for controlling a transmission of a message in a mobile communication terminal, comprising:
a first code segment, for preparing a transmission of a message; and
a second code segment, for determining transmission of the message according to whether a handover is being conducted.

20. The computer-readable recording medium of claim 19, further comprising:
a third code segment, for transmitting the message, if the handover is not being conducted.

21. The computer-readable recording medium of claim 19 or 20, adapted to perform the method according to one of claims 1 to 9.
